Europäisches Patentamt

European Patent Office

Office européen des brevets

(11) Veröffentlichungsnummer: **0 238 134 B1**

## EUROPÄISCHE PATENTSCHRIFT

(45) Veröffentlichungstag der Patentschrift: 29.05.91

(51) Int. Cl.⁵: **G01M 11/00**

(21) Anmeldenummer: **87200438.7**

(22) Anmeldetag: **10.03.87**

(54) Optisches Zeitbereichsreflektometer mit Heterodyn-Empfang.

(30) Priorität: **20.03.86 DE 3609371**

(43) Veröffentlichungstag der Anmeldung:
**23.09.87 Patentblatt 87/39**

(45) Bekanntmachung des Hinweises auf die
Patenterteilung:
**29.05.91 Patentblatt 91/22**

(84) Benannte Vertragsstaaten:
**DE FR GB**

(56) Entgegenhaltungen:
**EP-A- 0 193 242**

**ELECTRONICS LETTERS, Band 18, Nr. 20,
September 1982, Seiten 862-863, London,
GB; P. HEALEY et al.: "OTDR in single-mode
fibre at 1.5 mym using heterodyne detection"**

(73) Patentinhaber: **Philips Patentverwaltung
GmbH
Wendenstrasse 35 Postfach 10 51 49
W-2000 Hamburg 1(DE)DE**

Patentinhaber: **N.V. Philips' Gloeilampenfabrieken
Groenewoudseweg 1
NL-5621 BA Eindhoven(NL)FR GB**

(72) Erfinder: **Beckmann, Friedrich-Karl
Flagentwiete 44
W-2080 Pinneberg(DE)**
Erfinder: **Hoppe, Wolfgang
Mühlenweg 35
W-2000 Norderstedt(DE)**
Erfinder: **Knöchel, Reinhard, Dr.
Wacholderweg 23
W-2200 Elmshorn(DE)**
Erfinder: **Kordts, Jürgen
Pulverstrasse 11
W-2000 Wedel(DE)**

(74) Vertreter: **Koch, Ingo, Dr.-Ing. et al
Philips Patentverwaltung GmbH Wendenstrasse 35 Postfach 10 51 49
W-2000 Hamburg 1(DE)**

## Beschreibung

Die Erfindung bezieht sich auf ein optisches Zeitbereichsreflektometer (OTDR) mit Heterodyn-Empfang zur Bestimmung der Dämpfung eines Lichtwellenleiters (Meß-LWL) durch Messung des rückgestreuten Anteils von in den Meß-LWL gesendeten Lichtimpulsen, mit einer Einrichtung zur Sendung eines modulierten Laserstrahls in den Meß-LWL und einer Einrichtung zur Sendung eines einen Lokaloszillator bildenden Laserstrahls, dessen Licht mit dem rückgestreuten Licht des modulierten Laserstrahls überlagert und einem Photo-Detektor zugeführt wird, dessen zwischenfrequentes elektrisches Ausgangssignal ausgefiltert und ausgewertet wird.

Bei einer nach ECOC 83, "9th European Conference on Optical Communication", Seiten 177 bis 180 bekannten Anordnung dieser Art wird eine einzige Laser-Lichtquelle verwendet, von deren Lichtstrahl ein Teilstrahl zur Bildung des Lokaloszillators abgezweigt wird. Der Reststrahl wird durch einen akustooptischen Modulator (AOM) mit um eine akustische zwischenfrequenz verschobener Frequenz zeitversetzt in den Meß-LWL gesendet. Der Laser muß, da er gleichzeitig den Lokaloszillatorstrahl liefert, Dauerlicht aussenden. Mit derartigen Lasern können jedoch nur geringere Leistungen erreicht werden als mit impulsweise betriebenen Lasern, wie sie für direkt detektierende Anordnungen ohne Heterodyn-Empfang anwendbar sind. Die durch das Heterodyn-Prinzip erreichbare Verbesserung des Signal-Rauschverhältnisses (S/N) wird teilweise wieder dadurch vermindert, daß einerseits ein Anteil für den Lokaloszillatorstrahl von der Sendeintensität abgezweigt werden muß und daß andererseits Dauerlicht sendende Laser relativ niedrige optische Ausgangsleistungen aufweisen.

Der Erfindung liegt die Aufgabe zugrunde, bei einer Anordnung der eingangs genannten Art das Signal-Rauschverhältnis zu verbessern.

Die Lösung gelingt dadurch, daß die Sende-Lichtquelle ein Sende-Laser 1 ist, dessen Licht im Zeitintervall zwischen zwei aufeinanderfolgenden Zeitpunkten $t_1$ und $t_2$ derart beeinflußt ist, daß die Lichtfrequenz zwischen zwei Eckfrequenzen $f_{L1}$ und $f_{L2}$ variiert, und daß die den Lokaloszillator bildende Laser-Lichtquelle (6) Dauerlicht mit einer Frequenz $f_{Lo}$ sendet, welche außerhalb des Bereichs zwischen den Eckfrequenzen $f_{L1}$ und $f_{L2}$ liegt, und welche sich von einem zwischen den Frequenzen $f_{L1}$ und $f_{L2}$ liegenden Frequenzwert ($f_{LM}$) um die Zwischenfrequenz ($f_{ZF}$) unterscheidet.

Da das für den Lokaloszillator benötigte Licht durch einen eigenen Laser erzeugt wird, wird die in den Meß-LWL gesendete Lichtleistung des Sende-Lasers nicht um die Leistung des Lokaloszillators gemindert. Darüberhinaus ist für den Sende-Laser ein Impulsbetrieb möglich. Somit können Impulse erheblich höherer Intensität gesendet werden, als mit Dauerlicht-Lasern erreichbar ist.

Beim erfindungsgemäß vorgesehenen "chirp" (zeitliche Frequenzänderung) des Sende-Lasers ist es nicht erforderlich, die Frequenz des Sende-Lasers und insbesondere die Differenzfrequenz zum Lo-Laser zu stabilisieren, so daß auf einen erheblichen Regelaufwand verzichtet werden kann. Nur die Frequenz $f_{Lo}$ des Lo-Lasers braucht stabilisiert zu werden.

Allenfalls müssen die Eckfrequenzen $f_{L1}$ und $f_{L2}$ des Sende-Lasers grob stabilisiert werden. Die Eckfrequenzen können mit genügendem Abstand zu einem zwischen diesen liegenden Frequenzbereich angeordnet sein, welcher für die Bildung von auswertbaren Rückstreuimpulsen genutzt wird. Der Sende-Laser durchfährt dann stets einen Frequenzbereich der Bandbreite $\Delta f_{ZF}$, welcher nach Überlagerung mit der Frequenz $f_{Lo}$ des Lokaloszillators ein zwischenfrequentes Ausgangssignal am Bandpaß ergibt.

Man kann die Frequenz des Sende-Laserstrahls auf beliebige Art variieren. Eine bevorzugte besonders einfache Lösung besteht jedoch darin, daß der Steuerstrom des Sende-Lasers 1 für jedes Zeitintervall zwischen den Zeitpunkten $t_1$ und $t_2$, in dem jeweils ein Rückstreuimpuls gebildet wird, monoton verändert wird. Dabei wird die an sich unerwünschte Eigenschaft eines Lasers ausgenutzt, daß dessen Sendefrequenz in geringem, jedoch für die vorliegende Erfindung ausreichendem Maße vom elektrischen Steuerstrom abhängig ist. Gebräuchliche Laserdioden haben nutzbare "Abstimmsteilheiten" von 100 mHz/mA bis 3 GHz/mA.

Der zeitabhängige Verlauf eines "chirps" des Sende-Lasers, der beispielsweise durch einen entsprechenden zeitlichen Verlauf des elektrischen Steuerstroms erreichbar ist, muß monoton steigend oder fallend sein, damit während einer endlichen Zeitdauer solche Sendeenergie in den Meß-LWL geleitet wird, dessen Rückstreuanteile nach Überlagerung mit der Lo-Frequenz $f_{Lo}$ einen vom Bandpaß ausfilterbaren zwischenfrequenten Anteil bilden.

Eine besonders einfache Lösung mit einem gepulsten Sende-Laser ergibt sich dadurch, daß der Steuerstrom des Sende-Lasers (1) zwischen den Zeitpunkten $t_1$ und $t_2$ von "Null" bis zu einem Maximalwert gesteuert ist.

In regelmäßigen Abständen aufeinanderfolgende Sendeimpulse ergeben sich dadurch, daß der Steuerstrom des Sende-Lasers amplitudenmoduliert ist. Dabei werden sowohl beim Ansteigen als auch beim Verringern des Steuerstroms beim Durchlaufen des Frequenzbereichs $\Delta f_{ZF}$ auswertbare Pulse erzeugt. Der minimale Wert des Erregerstroms sollte so gering sein, daß sich bei dessen Wert im Vergleich zur maximalen Erregung eine praktisch vernachlässigbare thermische Belastung des Lasers ergibt.

Eine besonders vorteilhafte Ausführungsart der Erfindung ist dadurch gekennzeichnet, daß der Lichtstrahl des Sende-Lasers (1) über einen ersten optischen Isolator (7) und über einen ersten direkten Weg eines Faserkopplers (3) in den Meß-LWL (4) geleitet ist, und daß der Lichtstrahl des Lo-Lasers (6) in Gegenrichtung dazu über einen zweiten optischen Isolator (12) über einen zweiten direkten Weg des Faserkopplers (3) zum Photo-Detektor (5) geleitet ist.

Wenn man optische Isolatoren, die in Freistrahltechnik eingegliedert werden müssen, vermeiden möchte, ist eine bevorzugte Ausführungsform der Erfindung möglich, welche dadurch gekennzeichnet, ist, daß der Lichtstrahl des Sende-Lasers über einen direkten Weg eines ersten Faserkopplers in den Test-LWL geleitet ist, daß ein vom ersten Faserkoppler abgeleiteter Anteil des optischen Rückstreusignals über einen zweiten Faserkoppler mit dem Lichtstrahl des Lo-Lasers vereint zum optischen Detektor geleitet ist. Dabei besteht die vorteilhafte Möglichkeit, in einfacher Weise Synchronisier-Impulse für die Auswertung der Rückstreusignale dadurch zu gewinnen, daß ein vom Lichtstrahl des Sende-Lasers abgezweigter Teilstrahl mit einem Anteil des Lichtstrahls des Lo-Lasers überlagert und einem zweiten Photodetektor zugeführt ist, dessen elektrische Ausgangssignale die Schaltung triggern, welche die Rückstreuimpulse auswertet.

Zur Verkürzung der Impulszeit des Sende-Lasers ist es vorteilhaft, daß Abweichungen des Bereichs zwischen den Eckfrequenzen $f_{L1}$ und $f_{L2}$ des Sende-Lasers (1) von einem vorgegebenen Sollbereich durch einen Regelkreis (23) reduziert sind.

Eine vorteilhaft realisierbare Ausführungsform der Erfindung ist dadurch gekennzeichnet, daß die Differenz zwischen den Eckfrequenzen $f_{L1}$ und $f_{L2}$ einen Wert zwischen 300 MHz und 2 GHz hat. Weiterhin wirkt sich vorteilhaft aus, daß die Zwischenfrequenz $f_{ZF}$ einen Wert zwischen 0,5 und 15 GHz hat.

Erforderlichenfalls kann die Bandbreite des empfängerseitigen Bandpasses, welcher die Übertragungsdauer auswertbarer Sendefrequenzen bestimmt, dadurch verkleinert werden, daß er als Nachführfilter ausgebildet ist.

Die Vorteile der Erfindung werden anhand der Beschreibung von in der Zeichnung dargestellten vorteilhaften Ausführungsbeispielen näher erläutert.

Fig. 1 zeigt eine Ausführungsform der Erfindung

Fig. 2 zeigt den "chirp"-Verlauf eines Sendelasers,

Fig. 3 zeigt eine abgewandelte Ausführungsform der Erfindung ohne optische Isolatoren und mit zusätzlichen Steuer- und Regelelementen.

Die Frequenz des Sende-Laser 1 wird durch den Modulationsgenerator 2 zeitlich gesteuert, indem der Erregerstrom des Lasers 1 entsprechend verändert wird. Beispielsweise kann der Laser 1 zwischen den Zeiten $t_1$ und $t_2$ vom Aus- in den Ein-Zustand gesteuert werden. Er kann aber auch zwischen zwei Betriebszuständen mit vorgegebenen Zeitverlauf des Steuerstroms hin- und hergeschaltet oder kontinuierlich moduliert werden. In jedem Fall führt der Laser 1 zwischen den Eckzeiten $t_1$ und $t_2$ einen monotonen Frequenzchirp von $f_{L1}$ nach $f_{L2}$ oder auch in umgekehrter Richtung durch. Während der Zeit von $t_1$ bis $t_2$ sendet der Sende-Laser 1 über den optischen Isolator 7 und den Faserkoppler 3, welcher vorzugsweise ein 3db-Koppler ist, Lichtleistung in den Meß-LWL 4. Ein jeder Energieanteil $\Delta P//\Delta f$ erzeugt für sich ein Rückstreusignal. Anteile der während der Zeit von $t_1$ bis $t_2$ zurückgestreuten Signale werden über den Faserkoppler 3 gemeinsam mit dem vom Lo-Laser 6 über den optischen Isolator 12 gesendeten Lokaloszillatorstrahl dem optischen Detektor 5 (Photodiode) zugeführt. Der optische Isolator 7 verhindert, daß über den Koppler 3 störende Lichtanteile des Lo-Lasers in den Sende-Laser gelangen können. Umgekehrt verhindert der optische Isolator 12, daß Licht des Sende-Lasers in den Lo-Laser gelangen kann.

Das elektrische Ausgangssignal des Photodetektors 5 enthält zwischenfrequente Anteile. Sobald deren Frequenz während eines zwischen den Zeiten $t_1$ und $t_2$ liegenden Zeitintervalls $\tau$ s innerhalb der abgestimmten Durchlaßbandbreite des Bandpasses 8 liegt, erscheint am Ausgang des Bandpasses 8 ein Signal, welches im Verstärker 9 verstärkt und einem Zwischenfrequenzdetektor 10 zugeführt wird, dessen Ausgangssignal eine Information über den ortsabhängigen Verlauf der Dämpfung des Meß-LWL 4 enthält und von der Auswertschaltung 11 in üblicher Weise ausgewertet und angezeigt wird.

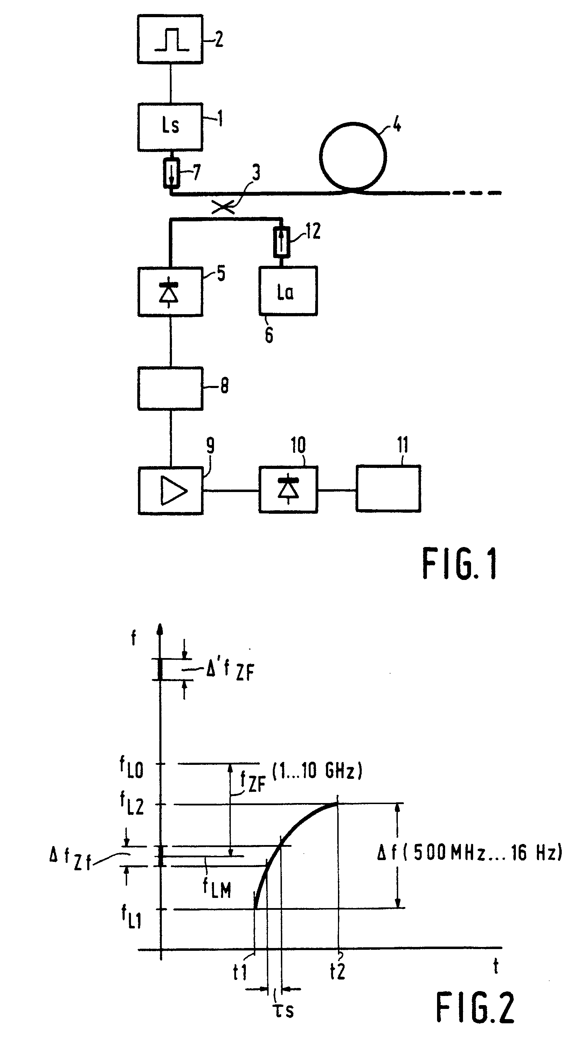

Anhand des in Figur 2 dargestellten Verlaufs der Frequenz f des Sende-Lasers 1 im Zeitintervall zwischen $t_1$ und $t_2$ wird die Wirkungsweise der Erfindung näher erläutert. Der Sende-Laser 1 ist zur Bildung eines Rückstreuimpulses während der Zeit $t_1$ bis $t_2$ eingeschaltet. Dabei möge sich durch entsprechende Steuerung des Steuerstroms des Sende-Lasers 1 ein Verlauf der Sendefrequenz f gemäß der dargestellten Kennlinie ergeben, welcher monoton von der Eckfrequenz $f_{L1}$ bis zur Eckfrequenz $f_{L2}$ steigt. Bevorzugt wird ein Bereich $f_{L2}-f_{L1}$ = 500 MHz bis 1 GHz. Die Frequenzen $f_{L1}$ und $f_{L2}$ sind kleiner als die optische Frequenz $f_{Lo}$

des Lo-Lasers 6 und schließen einen Frequenzbereich der Breite $\Delta f_{ZF}$ um die Frequenz $f_{LM}$ ein, welcher um die Durchlassfrequenz des Bandpasses 8, nämlich die Zwischenfrequenz $f_{ZF}$, kleiner als die Lo-Frequenz $f_{Lo}$ ist. Nur die Frequenzen innerhalb des Frequenzbandes $\Delta f_{ZF}$ bilden während des Zeitintervalls $T_s$ solche Rückstreusignale, die nach Überlagerung mit der Lo-Frequenz $f_{Lo}$ zu auswertbaren Ausgangssignalen des Bandpasses 8 führen. Der Abstand zwischen den Eckfrequenzen $f_{L1}$ und $f_{L2}$ ist so groß zu wählen, daß der Frequenzbereich $\Delta f_{ZF}$ genügend weit von den Eckfrequenzen $f_{L1}$ und $f_{L2}$ beabstandet ist, so daß temperatur- und/oder toleranzbedingte Schwankungen der Eckfrequenzen möglichst ohne Regelaufwand zugelassen werden können. Andererseits sollte die Zeitdifferenz $t_2 - t_1$ zur Vermeidung einer unnötigen Belastung des Sende-Lasers 1 nicht unnötig viel größer als die nutzbare Sendezeit $t_s$ gewählt werden.

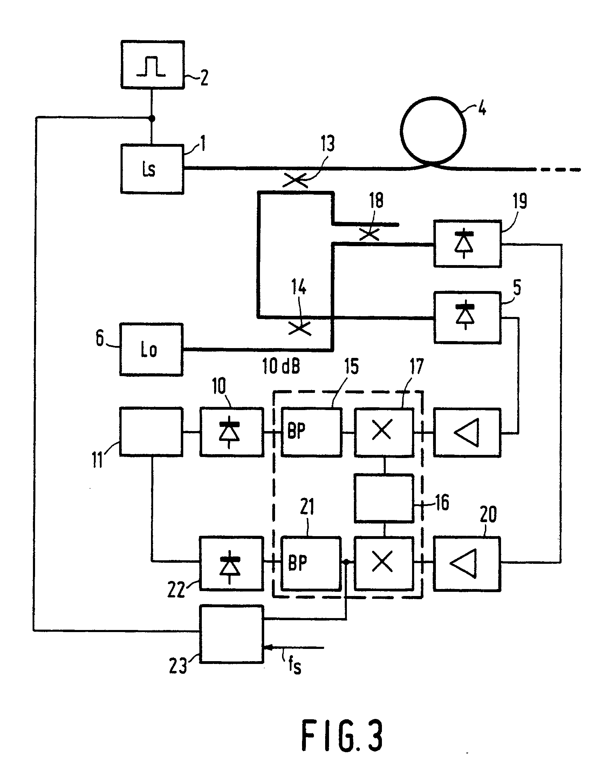

Bei der in Figur 3 dargestellten und gegenüber Figur 1 abgewandelten Anordnung sind keine optischen Isolatoren erforderlich. Es müssen also keine optischen Elemente in Freistrahltechnik angeschlossen werden. Die Faserkoppler 13 und 14 sind derart eingefügt, daß weder Licht des Sende-Lasers 1 in den Lo-Laser 6 noch Licht des Lo-Lasers 6 in den Sende-Laser gelangen kann.

Die Detektierung und Auswertung der Rückstreusignale erfolgt im wesentlichen wie im Falle der Anordnung nach Figur 1. Das elektrische Ausgangssignal des Detektors 5 wird über den Verstärker 14 zum Bandpaß 15 geleitet, dessen zwischenfrequentes Ausgangssignal detektiert und ausgewertet wird.

Zur Verringerung der Bandbreite des Bandpasses 15 insbesondere bei hohen Werten der Zwischenfrequenz $f_{ZF}$ ist eine Ausführung als Nachführfilter vorgesehen. Mit Hilfe des ZF-Oszillators 16 und des Mischers 17 erfolgt eine nochmalige Frequenzumsetzung in einen Bereich, in dem der Bandpaß 15 ohne Schwierigkeiten mit geringer Bandbreite realisiert werden kann.

Bei der Ausführung nach Figur 3 sind weitere Schaltkreise vorgesehen, die erforderlichenfalls vorteilhafte zusätzliche Steuerungs- und Regelfunktionen ermöglichen und im Bedarfsfalle vorgesehen werden können. Der Photodetektor 19 empfängt von den Faserkopplern 13 und 14 einen Teil des Lichts des Lo-Lasers 6, welchem ein Teil des Sendelichts des Sendelasers 1 durch den Koppler 18 überlagert wird. Das über den Verstärker 20 und durch den Bandpaß 21 vom elektrischen Detektor 22 detektierte zwischenfrequente Ausgangssignal wird der Auswertschaltung 11 eingegeben. Der Bandpaß 21 ist auf die gleiche Zwischenfrequenz und Bandbreite wie der Bandpaß 15 abgestimmt. Seine Bandbreite ist ebenfalls durch Hinzufügung der Zwischenfrequenz des Zwischenfrequenzoszillators 16 über den Mischer 21 verschmälert.

Das Ausgangssignal des elektrischen Detektors 22 erscheint früher und eindeutiger, als das um die Rückstreuzeitdifferenz verspätete Ausgangssignal des Detektors 10 und ist deshalb zur Triggerung der Auswertschaltung 11 geeignet.

Das ist insbesondere dann sinnvoll, wenn der Zeitpunkt des Erscheinens des zwischenfrequenten Rückstreusignals nicht genau definiert ist.

Eine Regelschaltung 23 kann bei Abweichung von einer Sollfrequenz $f_s$ über die elektrische Leitung 24 den chirp-Bereich des Sende-Lasers 1 nachregeln.

## Ansprüche

1. Optisches Zeitbereichsreflektometer (OTDR) mit Heterodyn-Empfang zur Bestimmung der Dämpfung eines Lichtwellenleiters (Meß-LWL) (4) durch Messung des rückgestreuten Anteils von in den Meß-LWL gesendeten Lichtimpulsen, mit einer Einrichtung zur Sendung eines modulierten Laserstrahls in den Meß-LWL (1) und einer Einrichtung zur Sendung eines einen Lokaloszillator bildenden Laserstrahls (6), dessen Licht mit dem rückgestreuten Licht des modulierten Laserstrahls überlagert und einem Photo-Detektor (5) zugeführt wird, dessen zwischenfrequentes elektrisches Ausgangssignal ausgefiltert und ausgewertet wird, dadurch gekennzeichnet, daß die Sende-Lichtquelle ein Sende-Laser (1) ist, dessen Licht im Zeitintervall zwischen zwei aufeinanderfolgenden Zeitpunkten $t_1$ und $t_2$ derart beeinflußt ist, daß die Lichtfrequenz zwischen zwei Eckfrequenzen $f_{L1}$ und $f_{L2}$ variiert, und daß die den Lokaloszillator bildende Laser-Lichtquelle (6) Dauerlicht mit einer Frequenz $f_{Lo}$ sendet, welche außerhalb des Bereichs zwischen den Eckfrequenzen $f_{L1}$ und $f_{L2}$ liegt, und welche sich von einem zwischen den Frequenzen $f_{L1}$ und $f_{L2}$ liegenden Frequenzwert $(f_{LM})$ um die Zwischenfrequenz $(f_{ZF})$ unterscheidet.

2. Anordnung nach Anspruch 1, dadurch gekennzeichnet, daß der Steuerstrom des Sende-Lasers 1 für jedes Zeitintervall zwischen den Zeitpunkten $t_1$ und $t_2$, in dem jeweils ein Rückstreuimpuls gebildet wird, monoton verändert wird.

3. Anordnung nach Anspruch 1 oder 2, dadurch gekennzeichnet, daß der Steuerstrom des Sende-Lasers (1) zwischen den Zeitpunkten $t_1$ und $t_2$ von "Null" bis zu einem Maximalwert gesteuert ist.

4. Anordnung nach Anspruch 1 oder 2, dadurch gekennzeichnet, daß der Steuerstrom des Sende-Lasers (1) amplitudenmoduliert ist.

5. Anordnung nach einem der Ansprüche 1 bis 4, dadurch gekennzeichnet, daß der Lichtsttrahl des Sende-Lasers (1) über einen ersten optischen Isolator (7) und über einen ersten direkten Weg eines Faserkopplers (3) in den Meß-LWL (4) geleitet ist, und daß der Lichtstrahl des Lo-Lasers (6) in Gegenrichtung dazu über einen zweiten optischen Isolator (12) über einen zweiten direkten Weg des Faserkopplers (3) zum Photo-Detektor (5) geleitet ist.

6. Anordnung nach einem der Ansprüche 1 bis 4, dadurch gekennzeichnet, daß der Lichtstrahl des Sende-Lasers (1) über einen direkten Weg eines ersten Faserkopplers (13) in den Meß-LWL (4) geleitet ist, daß ein vom ersten Faserkoppler (13) abgeleiteter Anteil des optischen Rückstreusignals über einen zweiten Faserkoppler (14) mit dem Lichtstrahl des Lo-Lasers (6) vereint zum optischen Detektor (5) geleitet ist.

7. Anordnung nach Anspruch 6, dadurch gekennzeichnet, daß ein vom Lichtstrahl des Sende-Lasers (1) abgezweigter Teilstrahl mit einem Anteil des Lichtstrahls des Lo-Lasers (6) überlagert und einem zweiten Photo-Detektor (19) zugeführt ist, dessen elektrische Ausgangssignale die Schaltung (11) triggern, welche die Rückstreuimpulse auswertet.

8. Anordnung nach einem der Ansprüche 1 bis 7, dadurch gekennzeichnet, daß Abweichungen des Bereichs zwischen den Eckfrequenzen $f_{L1}$ und $f_{L2}$ des Sende-Lasers (1) von einem vorgegebenen Sollbereich durch einen Regelkreis (23) reduziert sind.

9. Anordnung nach einem der Ansprüche 1 bis 8, dadurch gekennzeichnet, daß die Differenz zwischen den Eckfrequenzen $f_{L1}$ und $f_{L2}$ einen Wert zwischen 300 MHZ und 2 GHz hat.

10. Anordnung nach einem der Ansprüche 1 bis 9, dadurch gekennzeichnet, daß die Zwischenfrequenz $F_{ZF}$ einen Wert zwischen 0,5 und 15 GHz hat.

11. Anordnung nach einem der Ansprüche 1 bis 10, dadurch gekennzeichnet, daß der zum Ausfiltern des zwischenfrequenten elektrischen Ausgangssignals verwendete Bandpaß (15,16,17) ein Nachführfilter ist.

**Claims**

1. Optical time domain reflectometer (OTDR) having heterodyne reception for determining attenuation of an optical waveguide (measuring waveguide) (4) by measuring the backscattered portion of light pulses transmitted into the measuring waveguides, comprising an arrangement for transmitting a modulated laser beam into the measuring waveguide (1) and an arrangement for transmitting a local oscillator laser beam (6) whose light is superposed by the backscattered light of the modulated laser beam and is applied to a photodetector (5) whose intermediate-frequency electrical output signal is filtered and evaluated, wherein the transmitting light source is a transmitting laser (1) whose light in the time interval between two successive instants $t_1$ and $t_2$ is influenced so that the light frequency varies between two cut-off frequencies $f_{L1}$ and $f_{L2}$, and wherein the laser light source (6) producing the local oscillator beam transmits continuous light at a frequency $f_{LO}$ which frequency lies outside the range between the cut-off frequencies $f_{L1}$ and $f_{L2}$ and differs from a frequency value ($f_{LM}$) situated between the frequencies $f_{L1}$ and $f_{L2}$ by an amount equal to the intermediate frequency ($f_{ZF}$).

2. Arrangement as claimed in claim 1, wherein the control current of the transmitting laser 1 is monotonically varied for each time interval between the instants $t_1$ and $t_2$ in which a backscatter pulse is formed.

3. Arrangement as claimed in claim 1 or 2, wherein the control current of the transmitting laser (1) is varied from zero to a maximum value between the time intervals $t_1$ and $t_2$.

4. Arrangement as claimed in claim 1 or 2, wherein the control current of the transmitting laser (1) is amplitude modulated.

5. Arrangement as claimed in one of the claims 1 to 4, wherein the light beam of the transmitting laser (1) is conveyed into the measuring waveguide (4) through a first optical isolator (7) and a first direct path of a fibre coupler (3), and wherein the light beam of the Lo laser (6) is conveyed in opposite direction into the photodetector (5) through a second optical isolator (12) and a second direct path of a fibre coupler (3).

6. Arrangement as claimed in one of the claims 1 to 4, wherein the light beam of the transmitting laser (1) is conveyed into the measuring waveguide (4) through a direct path of a first fibre coupler (13), and wherein a portion of the optical backscattered signal derived from the first fibre coupler (13) and combined with the light beam of the Lo laser (6) is conveyed to the photodetector (5) through a second fibre coupler (14).

7. Arrangement as claimed in claim 6, wherein a partial light beam derived from the light beam of the transmitting laser (1) is superposed by a portion of the light beam of the Lo laser (6) and conveyed to a second photodetector (19) whose electrical output signals trigger the circuit means (11), said circuit means evaluating the backscattered pulses.

8. Arrangement as claimed in one of the claims 1 to 7, wherein deviations of the range between the cut-off frequencies $f_{L1}$ and $f_{L2}$ of the transmitting laser (1) from a predetermined nominal value are reduced by a control circuit (23).

9. Arrangement as claimed in one of the claims 1 to 8, wherein the difference between the cut-off frequencies $f_{L1}$ and $f_{L2}$ has a value between 300 MHz and 2 GHz.

10. Arrangement as claimed in one of the claims 1 to 9, wherein the intermediate frequency $F_{ZF}$ has a value between 0.5 and 15 GHz.

11. Arrangement as claimed in one of the claims 1 to 10, wherein the passband (15,16,17) used for filtering out the intermediate-frequency electrical output signal is a tracking filter.

## Revendications

1. Réflectomètre optique fonctionnant dans le domaine temporel au moyen d'une réception hétérodyne pour la détermination de l'atténuation d'un guide d'ondes optique (guide d'ondes à mesurer (4)), et utilisant la mesure de la fraction rétrodiffusée des impulsions lumineuses émises dans le guide d'ondes à mesurer (4), ce réflectomètre comportant un dispositif (1) pour émettre un rayon laser modulé dans le guide d'ondes optique à mesurer (4) et un dispositif (6) pour émettre un rayon laser formant un oscillateur local, dont la lumière est superposée à la lumière rétrodiffusée du rayon laser modulé et est appliquée à un photodétecteur (5) dont le signal de sortie électrique à fréquence intermédiaire est filtré et évalué, caractérisé en ce que la source lumineuse d'émission est un laser d'émission (1) dont la lumière, dans l'intervalle de temps compris entre deux instants successifs $t_1$ et $t_2$, est influencée d'une manière telle que la fréquence optique varie entre deux fréquences limites $f_{L1}$ et $f_{L2}'$ et que la source lumineuse à laser (6) formant l'oscillateur local émet de la lumière ininterrompue à une fréquence $f_{LO}$ qui se trouve en dehors du domaine compris entre les fréquences limites $f_{L1}$ et $f_{L2}$ et qui diffère d'une valeur de fréquence $f_{LM}$ située entre les fréquences $f_{L1}$ et $f_{L2}$ dans une mesure égale à la fréquence intermédiaire $f_{ZF}$.

2. Réflectomètre suivant la revendication 1, caractérisé en ce que le courant de commande du laser d'émission (1) varie de manière monotone pour chaque intervalle de temps entre les instants $t_1$ et $t_2$, dans lequel une impulsion de rétrodiffusion est chaque fois formée.

3. Réflectomètre suivant la revendication 1 ou 2, caractérisé en ce le courant de commande du laser d'émission (1) est piloté de "zéro" jusqu'à une valeur maximale entre les instants $t_1$ et $t_2$.

4. Réflectomètre suivant la revendication 1 ou 2, caractérisé en ce que le courant de commande du laser d'émission (1) est modulé en amplitude.

5. Réflectomètre suivant l'une quelconque des revendications 1 à 4, caractérisé en ce que le rayon lumineux du laser d'émission (1) est introduit dans le guide d'ondes optique à mesurer (4) par l'intermédiaire d'un premier isolateur optique (7) et d'une première voie directe d'un coupleur (3) et que le rayon lumineux du laser local (6) est amené au photodétecteur (5) dans le sens inverse par l'intermédiaire d'un second isolateur optique (12) et d'une seconde voie directe du coupleur (3).

6. Réflectomètre suivant l'une quelconque des revendications 1 à 4, caractérisé en ce que le rayon lumineux du laser d'émission (1) est amené dans le guide d'ondes optique à mesurer (4) par l'intermédiaire d'une voie directe d'un premier coupleur (13), qu'une fraction du signal optique rétrodiffusé, dérivée du premier coupleur (13), est amenée au détecteur optique (5) par l'intermédiaire d'un second coupleur (14) conjointement avec le rayon lumineux du laser local (6).

7. Réflectomètre suivant la revendication 6, caractérisé en ce qu'un rayon partiel dérivé du rayon lumineux du laser d'émission (1) est superposé à une fraction du rayon lumineux du laser local (6) et est appliqué à un second photodétecteur (19), dont les signaux de sortie électriques déclenchent le circuit (11) qui évalue les impulsions rétrodiffusées.

8. Réflectomètre suivant l'une quelconque des revendications 1 à 7, caractérisé en ce que des déviations du domaine entre les fréquences limites $f_{L1}$ et $f_{L2}$ du laser d'émission (1) par rapport à un domaine de consigne prédéfini sont réduites par un circuit de régulation (23).

9. Réflectomètre suivant l'une quelconque des revendications 1 à 8, caractérisé en ce que la différence entre les fréquences limites $f_{L1}$ et $f_{L2}$ a une valeur comprise entre 300 MHz et 2 GHz.

10. Réflectomètre suivant l'une quelconque des revendications 1 à 9, caractérisé en ce que la fréquence intermédiaire $F_{ZF}$ a une valeur comprise entre 0,5 et 15 GHz.

11. Réflectomètre suivant l'une quelconque des revendications 1 à 10, caractérisé en ce que le dispositif passe-bande (15,16,17) utilisé pour le filtrage du signal de sortie électrique à fréquence intermédiaire est un filtre de correction.

**FIG.1**

**FIG.2**

FIG.3